# EUROPEAN PATENT SPECIFICATION

(11) **EP 1 524 170 B1**
(45) Date of publication and mention of the grant of the patent: **29.12.2010**
(21) Application number: 04024679.5
(22) Date of filing: 15.10.2004
(51) Int. Cl.: B62B 3/02

(54) **Wheeled container**
Rollcontainer
Conteneur roulant

(30) Priority: 17.10.2003 GB 0324322
(43) Date of publication of application: 20.04.2005
(73) Proprietor: Linpac Allibert Limited, Birmingham B37 7YN (GB)
(72) Inventor: Mallan, Lee Buchanan, Hartford Northwich CV8 3AQ (GB)
(74) Representative: Jacob, Reuben Ellis

(56) References cited:
- DE-A1- 3 905 977
- GB-A- 754 135
- US-A- 4 630 746
- US-A- 5 310 063

## Description

This invention relates to wheeled containers and to containers and display units including wheeled base assemblies.

In shops such as supermarkets and grocery stores goods are moved around the stores between storage areas and display areas on wheeled vehicles such as trolleys and wheeled containers. One particular type of container commonly used for transporting goods is a bulk display unit according to the preamble of claim 1 as described in EP1 833 712. A quantity of goods loaded onto this type of container can be moved from a goods storage area to a display area where consumers can select goods directly from the unit. For example, a bulk display unit may be used to transport a type of vegetable from a refrigerated warehousing area to the correct place on the shop floor. When required, a shop assistant pushes the display unit through the store and positions it adjacent other units containing other vegetables.

The bulk display units typically have a plurality of wheels or castors, for example it is not uncommon for such units to have two wheels and two castors. Wheels/castors are normally attached to the underside of the unit and support the unit above the floor. It is intended that further references to wheels in the specification include references to castors, unless otherwise stated.

Some consumers prefer to have display units that include shrouds for some, or all of the wheels, whereas others prefer display units that do not include shrouds. A shroud is a wall of material that depends from the base member of a wheeled container to enclose the wheel. Meeting different consumers' needs causes problems for display unit manufacturers since it is necessary to produce different versions of each display unit. This greatly increases manufacturing costs as the manufacturer requires different tooling for each version. The manufacturer is also obliged to stock each version of the display unit leading to increased warehouse size and associated storage costs.

Accordingly, the present invention seeks to mitigate some of the afore-mentioned problems.

According to one aspect of the present invention there is provided a wheeled container including a base member having a surface for supporting goods, a plurality of wheels for supporting the base member above a floor, and at least one shroud, wherein the shroud is releasably attached to the base member.

Since the shroud can be releasably attached to the base member the manufacturer only has to produce one version of the wheeled container. Shrouds can be attached to the base member, or not, according to the orders received. This provides a significant advantage to the manufacturer since he can stock display units without the shrouds attached and include them in the product only in response to orders requesting units with shrouds.

The present invention is not to be construed as being limited to bulk display units. The base member can be included in any wheeled container or wheeled vehicle for transporting goods such as trolleys and dollies.

Advantageously the container includes a locating assembly for locating the shroud on the base member in the correct position. Preferably the locating assembly includes at least one locating pin formed on one of the shroud and the base member and at least one recess formed in the other.

Advantageously the container includes a first locking mechanism having at least one detent formed in one of the shroud and the base member and at least one complementary hole formed in the other arranged for snap-fit engagement. In use, the detent engages with the hole when the shroud is attached to the base member to lock the shroud to the base member and the shroud is unlocked from the base member by depressing the detent clear of the hole.

Preferably the locating pin is formed integrally with the shroud and the detent is formed integrally with the locating pin, and wherein the recess and the hole are formed in the base member.

Preferably the wheeled container includes a second locking mechanism. For example the shroud may be screwed or bolted to the base member to increase the strength of the joint.

Preferably the base member and / or the shroud is made from a plastics material.

An embodiment of the present invention will now be described, by way of example only, with reference to the accompanying drawings in which like references indicate equivalent features, wherein:
Figure 1 is a perspective view of a bulk display unit from above;
Figure 2 is a perspective view of the bulk display unit of Figure 1 with side and end walls folded down;
Figure 3 is a perspective view of a collapsed bulk display unit;
Figure 4 is a side view of the bulk display unit of Figure 3;
Figure 5 is a perspective view of a bulk display unit from below;
Figure 6 is a plan view of a base assembly from below;

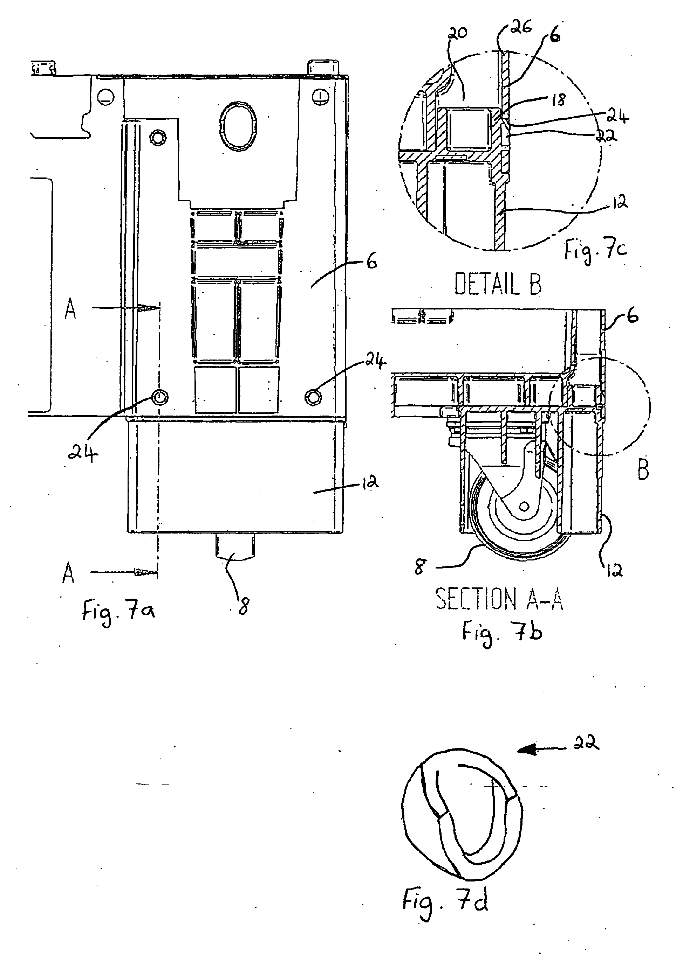

Figure 7a is a detail front view of a base assembly with shroud;
Figure 7b is a detail sectional view of the base assembly of Figure 3a;
Figure 7c is a detail sectional view of the base assembly of Figure 3a in a larger scale; and
Figure 7d is a detail view of a detent.

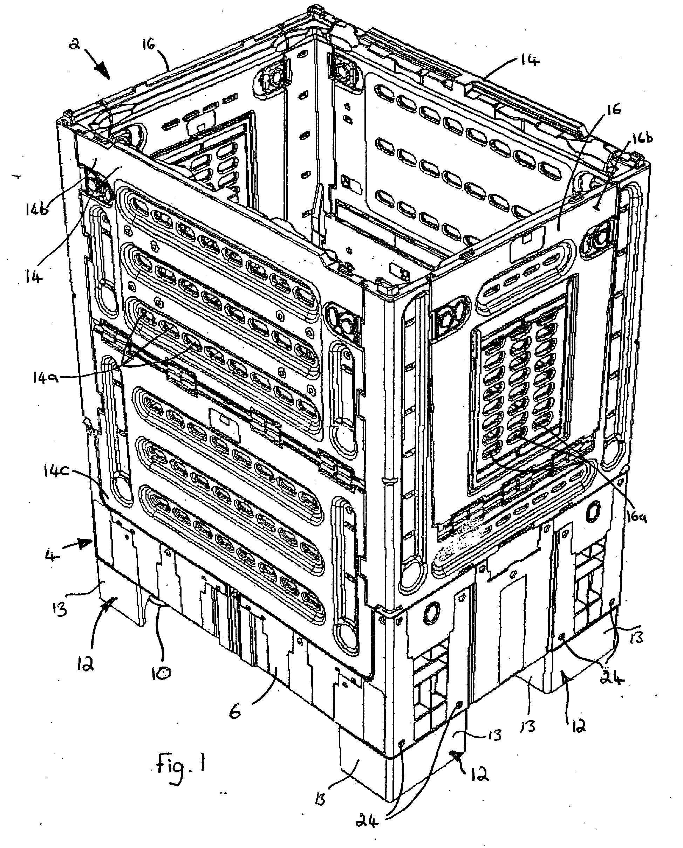

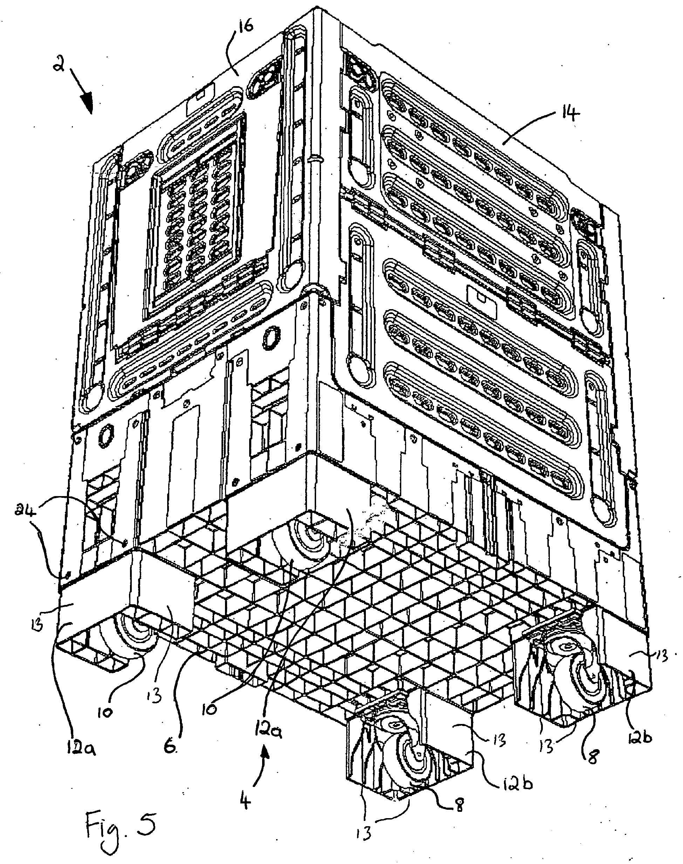

Figures 1 and 5 show a bulk display unit 2 for transporting and displaying goods, wherein the display unit 2 includes a base assembly 4 having a base member 6, two castors 8, two wheels 10, two first shrouds 12a and two second shrouds 12b.

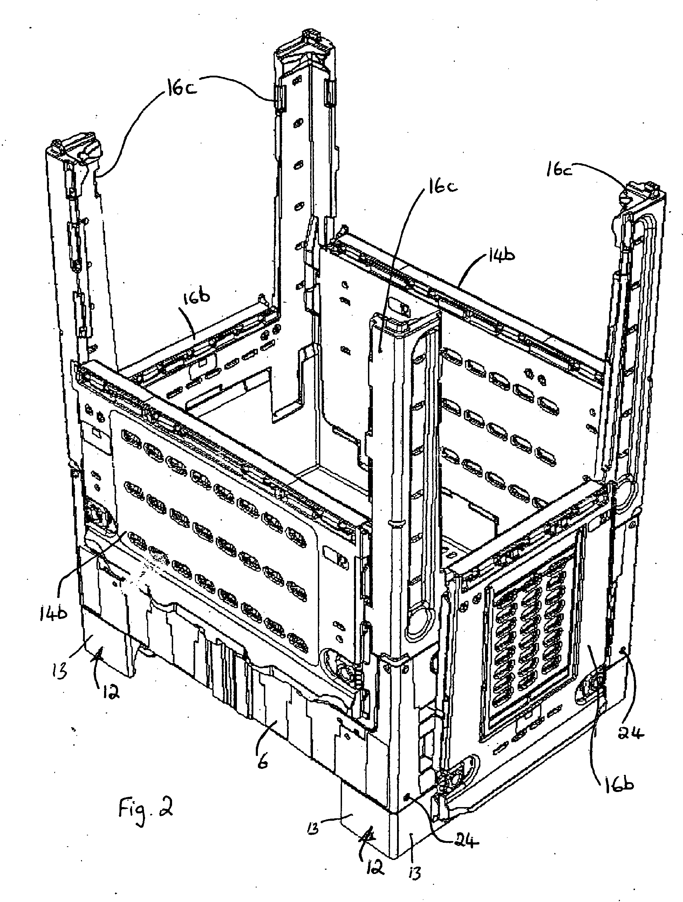

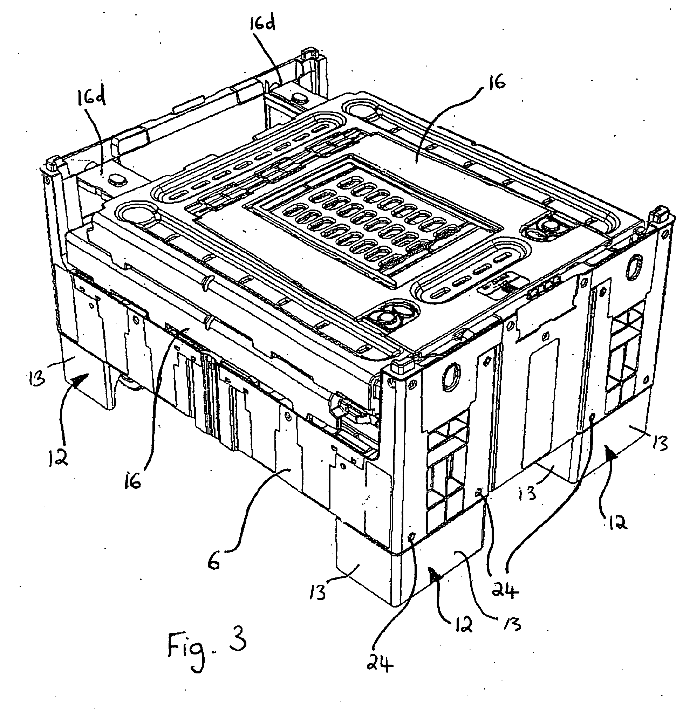

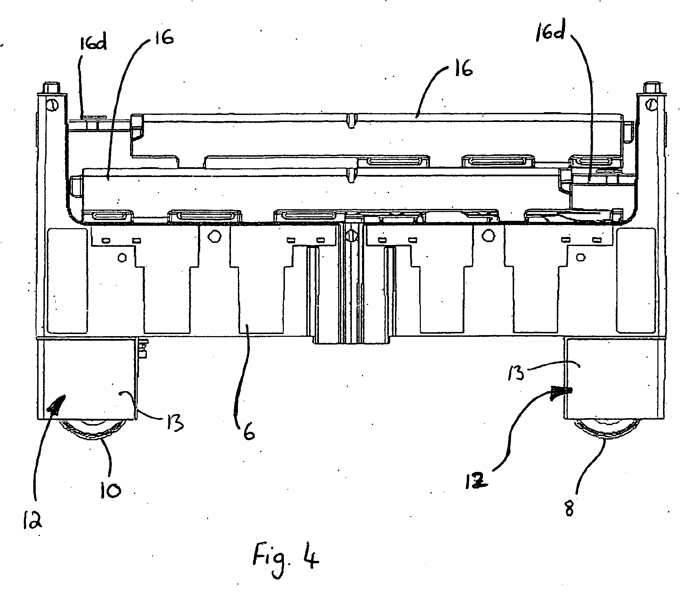

The base assembly 4 supports two side walls 14 and two end walls 16. The side walls 14 and end walls 16 define a space for storing goods to be transported and/or displayed within the display unit 2. The side and end walls 14,16 are typically made from a plastics material. The end walls 16 and the side walls 14 have a plurality of through holes 14a,16a which reduce the weight of the bulk display unit 2 and allow air to circulate around the goods stored in the unit 2. The end walls 16 each have a hinged part 16b centrally located within the wall 16 which can fold downwards from peripheral parts 16c of the end walls (see Figures 1 and 2). This allows the height of the end walls 16 to be reduced allowing easier access to the goods stored within the unit 2 as the quantity of the goods reduces. Similarly, the side walls 14 comprise upper and lower parts 14b,14c. The upper parts 14b of the side walls can fold downwards to reduce the height of the side walls. Advantageously, the display unit 2 is collapsible for easy storage (see Figures 3 and 4). The side walls 14 are attached to the peripheral parts 16c of the end walls by integrally formed snap-fit fittings and to the base member 6 by hinges. The side walls 14 can be disengaged from the peripheral parts 16c of the end walls and folded over the base member 6. The end walls 16 are attached to the base member 6 via sliding hinge arrangements 16d. These allow the end walls 16 to be folded across the upper surface of the base member whilst remaining pivotally engaged with the base member 6.

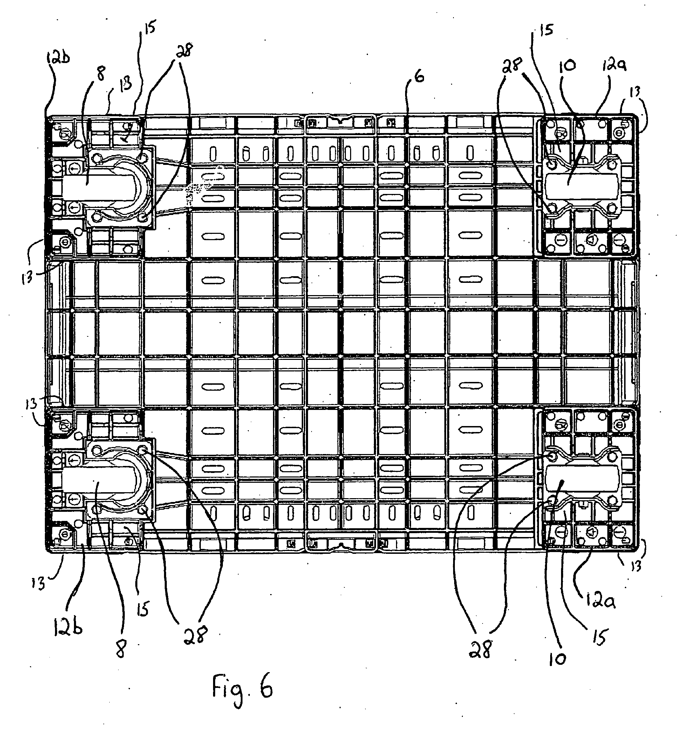

The base member 6 is substantially rectangular in plan and is made from a plastics material and is preferably manufactured using a moulding technique such as injection moulding. The underside of the base member has a rectangular cross-sectioned honeycomb arrangement to provide a lightweight and stiff base member 6 (see Figures 5 and 6).

The wheels 10 and castors 8 are located towards the corners of the underside of the base member. Partially surrounding each wheel 10 and each castor 8 are first and second shrouds 12a, 12b respectively. The first and second shrouds 12a, 12b have three side walls 13 and a top plate 15. When the shrouds 12a, 12b are attached to the underside of the base member; the side walls 13 depend from the base member to form substantially u-shaped barriers around the wheels 10 and castors 8. However the invention is not limited to these specific types of shrouds. For example, the wheeled container may be arranged to include elongate shrouds that partially surround more than one wheel 10 or castor 8, or the container may include a single shroud that is adapted to surround all wheels 10 and castors 8. In the latter case, the shroud may include four side walls 13 that extend around the perimeter of the base member and that depend from the underside of the base member.

The side walls 13 of the shrouds are reinforced by ribs to increase the rigidity of the shrouds 12a, 12b and hence the level of protection provided to the wheels 10 /castors 8. The arrangement of ribs for the first shrouds 12a differ to those of the second shrouds 12b since the second shrouds 12a have to accommodate rotational movement of the castors 8 about a vertical axis (see Figure 5). Preferably the side walls 13 of the shroud are arranged to be flush with the side walls of the base member.

The first and second shrouds 12a,12b are attached to the underside of the base member in the same manner. The top plate 15 of the shrouds 12a, 12b lies against the underside of the base member. The top plate 15 includes a pair of locating pins 18 that fit into a pair of complementary recesses 20 in the underside of the base member to correctly locate the shrouds 12a,12b. The locating pins 18 are rectangular sectioned tubular protrusions that are integrally formed with the shrouds 12a, 12b. The recesses 20 are rectangular sectioned cavities formed in the underside of the base member, preferably towards an edge of the base member. The locating pins 18 each include a detent 22 (see Figures 3c and 3d) which snap-fits into a corresponding hole 24 in the side wall 26 of the base member. The detents 22 comprise cylindrical tubes with bevelled edges. To release the shroud 12a,12b from the base member the detents 22 are depressed and the shroud is separated from the base member 6. The top plate 15 also includes four through holes. During assembly the shroud 12a, 12b is correctly located on the underside of the base member by engaging the locating pins 18 with the recesses 20. The wheel 10 (or castor 8) is then attached to the base member by four bolts 28 which pass through the holes in the top plate 15 thereby firmly securing the shroud 12a,12b to the base member 6.

The shrouds 12a,12b can be removed from the base member 6 by removing bolts 28, removing the wheels 10 / castors 8, depressing the detents 22 and disengaging the locating pins 18 from the recesses 20. The manufacturer of the display units 2 therefore only has to produce one version of the display unit 2 since shrouds 12a,12b can be added to, or removed from, the display units 2 at any time to meet individual consumers' needs. This leads to a reduction in manufacturing and storage costs

It will be apparent to the skilled person that other arrangements for attaching shrouds 12a,12b to the base member 6 can be used.

## Claims

1. A wheeled container(2) including a base member (6) having a surface for supporting goods, plurality of wheels (10) for supporting the base member (6) above a floor, and at least one shroud (12a, b) partially surrounding one or more wheels, **characterised in that** the shroud (12a, b) is releasably attached to the base member.

2. A wheeled container according to claims 1, including a locating assembly(18, 20) for locating the shroud (12a, b) on the base member (6) in the correct position.

3. A wheeled container according to claim 2, wherein the locating assembly includes at least one locating pin (18) formed on one of the shroud(12a, b) and the base member(6) and at least one recess (20) formed in the other.

4. A wheeled container according to any one of the preceding claims, including a first locking mechanism having at least one detent (22) formed in one of the shroud (12a, b) and the base member (6) and at least one complementary hole (24) formed in the other arranged for snap-fit engagement.

5. A wheeled container according to claim 4 when dependent on claim 3, wherein the locating pin (18) is formed integrally with the shroud (12a, b) and the detent (22) is formed integrally with the locating pin (18), and wherein the recess (20) and the hole (24) are formed in the base member (6).

6. A wheeled container according to claim 4 or 5, including a second locking mechanism.

7. A wheeled container according to any one of the preceding claims, wherein the base member (6) is made from a plastics material.

8. A wheeled container according to any one of the preceding claims, wherein the shroud (12a, b) is made from a plastics material.

## Patentansprüche

1. Rollcontainer (2), enthaltend ein Basisglied (6) mit einer Oberfläche zum Stützen von waren, mehrere Räder (10) zum Stützen des Basisglieds (6) auf einem Boden und zumindest eine Verkleidung (12a, b), die ein oder mehr Räder teilweise umgibt, **dadurch gekennzeichnet, dass** die Verkleidung (12a, b) abnehmbar an dem Basisglied angebracht ist.

2. Rollcontainer nach Anspruch 1, enthaltend eine Fixieranordnung (18, 20) zum Fixieren der Verkleidung (12a, b) an dem Basisglied (6) in der korrekten Position.

3. Rollcontainer nach Anspruch 2, wobei die Fixieranordnung zumindest einen Fixierstift (18), der an einem der Verkleidung (12a, b) und dem Basisglied (6) ausgebildet ist, und zumindest eine Aussparung (20) enthält, die in dem anderen ausgebildet ist.

4. Rollcontainer nach einem der vorhergehenden Ansprüche, enthaltend einen ersten Sperrmechanismus mit zumindest einer Arretierung (22), die in einem der Verkleidung (12a, b) und dem Basisglied (6) ausgebildet ist, und zumindest einem ergänzenden Loch (24), das in dem anderen ausgebildet ist, welcher zum Einschnappen angeordnet ist.

5. Rollcontainer nach Anspruch 4, wenn er von Anspruch 3 abhängig ist, wobei der Fixierstift (18) einstückig mit der Verkleidung (12a, b) ausgebildet ist und die Arretierung (22) einstückig mit dem Fixierstift (18) ausgebildet ist, und wobei die Aussparung (20) und das Loch (24) in dem Basisglied (6) ausgebildet sind.

6. Rollcontainer nach einem der Ansprüche 4 oder 5, enthaltend einen zweiten Sperrmechanismus.

7. Rollcontainer nach einem der vorhergehenden Ansprüche, wobei das Basisglied (6) aus einem Kunstsoffmaterial hergestellt ist.

8. Rollcontainer nach einem der vorhergehenden Ansprüche, wobei die Verkleidung (12a, b) aus einem Kunststoffmaterial hergestellt ist.

## Revendications

1. Conteneur roulant (2) comportant un élément de base (6) présentant une surface pour supporter des marchandises, une pluralité de roues (10) pour supporter l'élément de base (5) au-dessus d'un sol, et au moins un élément de protection (12a, b) entourant partiellement une ou plusieurs roue(s), **caractérise en ce que** l'élément de protection (12a, b) est fixé de façon libérable à l'élément de base.

2. Conteneur roulant selon la revendication 1, comprenant un assemblage de positionnement (18, 20) pour placer l'élément de protection (12a, b) sur l'élément de base (6) dans la position correcte.

3. Conteneur roulant selon la revendication 2, dans lequel l'assemblage de positionnement comporte au moins une broche de positionnement (18) formée sur l'un de l'élément de protection (12a, b) et de l'élément de base (6) et au moins un évidement (20) formé dans l'autre.

4. Conteneur roulant selon l'une quelconque des revendications précédentes, comportant un premier mécanisme de verrouillage ayant au moins un cliquet (22) formé dans l'un de l'élément de protection (12a, b) et de l'élément de base (6) et au moins un trou complémentaire (24) formé dans l'autre, disposés en vue d'un engagement par encliquetage par pression.

5. Conteneur roulant selon la revendication 4 lorsque dépendante de la revendication 3, dans lequel la broche de positionnement (18) est formée de façon solidaire avec l'élément de protection (12a, b) et le cliquet (22) est formé de façon solidaire avec la broche de positionnement (18), et dans lequel l'évidement (20) et le trou (24) sont formés dans l'élément de base (6).

6. Conteneur roulant selon la revendication 4 ou 5, comprenant un second mécanisme de verrouillage.

7. Conteneur roulant selon l'une quelconque des revendications précédentes, dans lequel l'élément de base (6) est constitué de matière plastique.

8. Conteneur roulant selon l'une quelconque des revendications précédentes, dans lequel l'élément de protection (12a, b) est constitué de matière plastique.
